# DEMANDE DE BREVET EUROPEEN

(11) **EP 0 803 404 A1**
(43) Date de publication de la demande: **29.10.1997**
(21) Numéro de dépôt: 97400902.9
(22) Date de dépôt: 22.04.1997
(51) Int. Cl.: B60R 16/00

(54) **Commutateur pour véhicules automobiles comprenant deux bagues rotatives**

(30) Priorité: 24.04.1996 FR 9605155
(71) Demandeur: MAGNETI MARELLI FRANCE, 92000 Nanterre (FR)
(72) Inventeur: Vivier, Yves, 14480 Rucqueville (FR)
(74) Mandataire: Texier, Christian

(57) **Abrégé**

La présente invention concerne un commutateur électrique pour véhicules automobiles comprenant deux bagues (30, 40) montées à rotation autour d'un axe commun (O-O) et situées respectivement de part et d'autre d'une bague fixe (200), un doigt de réinitialisation (300) lié à rotation avec l'une des bagues (40) et des moyens (210) assurant un déplacement axial du doigt de réinitialisation (300) en fonction de sa rotation pour venir sélectivement en prise avec la seconde bague (30), caractérisé par le fait que la seconde bague (30) porte une tige (34) qui traverse la bague fixe (200) pour être sélectivement en prise avec le doigt de réinitialisation (300).

## Description

La présente invention concerne le domaine des commutateurs électriques pour véhicules automobiles.

Plus précisément, la présente invention concerne les commutateurs comprenant une manette pourvue de deux bagues montées à rotation autour d'un axe commun et équipée de moyens assurant une liaison sélective entre les bagues.

On a décrit notamment dans le document FR-A-2659488, une manette de commutateur comprenant un corps de manette et deux bagues de commande montées à rotation sur le corps pour assurer des fonctions respectives lors de leur rotation et un doigt lié à rotation avec l'une des bagues et susceptible de translation sélective par rapport à celle-ci entre une position de repos dans laquelle le doigt n'interfère pas avec le trajet de rotation de la seconde bague et une position active dans laquelle le doigt interfère avec le trajet de rotation de la seconde bague.

Une telle structure de commutateur peut trouver notamment application dans la remise à zéro d'une bague utilisée pour piloter une commande anti-brouillard lorsque la bague qui pilote les feux d'éclairage est elle-même remise à zéro.

La structure décrite dans le document FR-A-2659488 a déjà rendu de grands services. Toutefois, elle conduit à un jeu non négligeable en raison de l'empilement de nombreuses pièces intervenant dans le mécanisme, et conduit par ailleurs à une structure volumineuse.

La présente invention a maintenant pour but de perfectionner les moyens décrits dans le document FR-A-2659488.

Ce but est atteint selon la présente invention grâce à un commutateur électrique pour véhicules automobiles du type comprenant deux bagues montées à rotation autour d'un axe commun et situées respectivement de part et d'autre d'une bague fixe, un doigt de réinitialisation lié à rotation avec l'une des bagues et des moyens assurant un déplacement axial du doigt en fonction de sa rotation, pour venir sélectivement en prise avec la seconde bague, caractérisé par le fait que la seconde bague comprend une tige, de préférence liée de moulage, qui traverse la bague fixe pour être sélectivement en prise avec le doigt de réinitialisaiton.

Comme on l'explicitera par la suite, la présente invention permet de supprimer le porte à faux et le jeu résultant de la grande longueur du doigt de réinitialisation imposés par la structure proposée dans le document FR-A-2659488, selon laquelle le doigt de réinitialisation traversait la bague fixe.

D'autres caractéristiques, buts et avantages de la présente invention apparaîtront à la lecture de la description détaillée qui va suivre et en regard des dessins annexés donnés à titre d'exemples non limitatifs et sur lesquels :
- la figure 1 représente une vue schématique en perspective éclatée d'une structure de commutateur conforme à la présente invention,

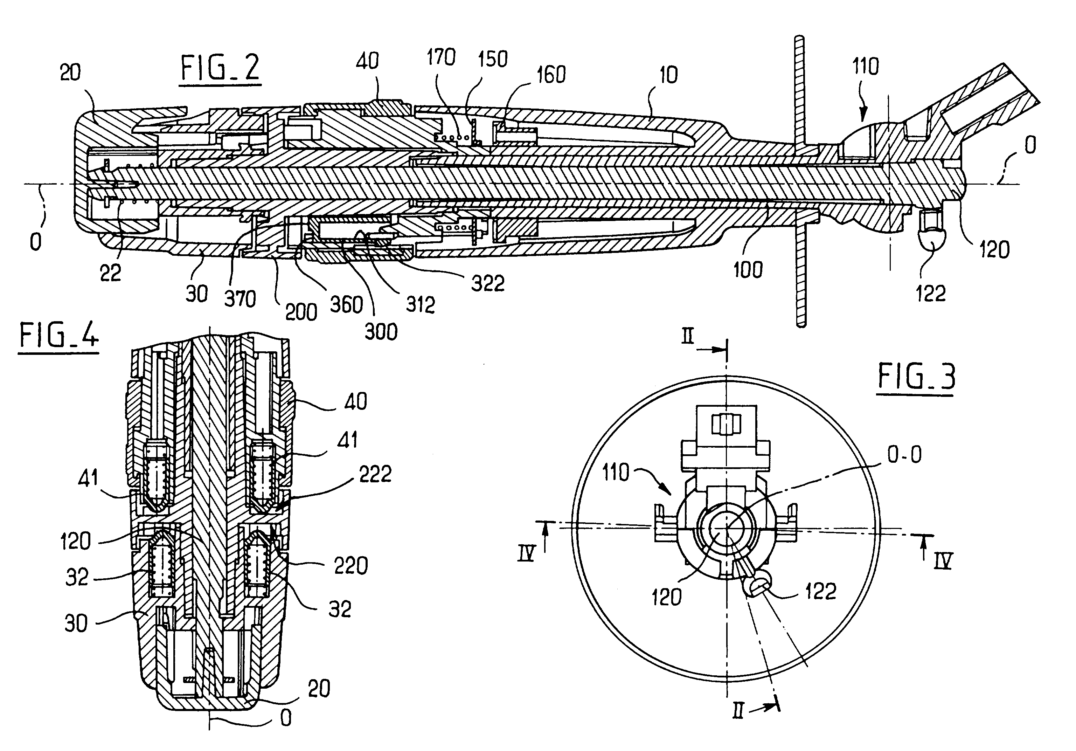

- la figure 2 représente une vue en coupe axiale selon les plans de coupe référencés II-II sur la figure 3 d'une telle structure conforme à une première variante de réalisation de l'invention,
- la figure 3 représente une vue en bout de cette même structure,
- la figure 4 représente une autre vue en coupe axiale partielle selon le plan de coupe IV-IV de la figure 3 de la même structure,
- la figure 5 représente une vue axiale d'une structure de commutateur conforme à une seconde variante de réalisation de la présente invention selon les plans de coupe référencés V-V sur la figure 6,
- la figure 6 représente une vue en bout de cette même structure,
- la figure 7 représente une autre vue partielle en coupe de la même structure conforme à la seconde variante selon le plan de coupe VII-VII de la figure 6,
- les figures 8 et 9 représentent deux vues en perspective d'un doigt de réinitialisation conforme à la présente invention,
- la figure 10 représente une vue latérale du même doigt,
- les figures 11 et 12 représentent deux vues en bout opposées du même doigt de réinitialisation,
- la figure 13 représente une vue en coupe du même doigt de réinitialisation selon le plan de coupe référencé XIII-XIII sur la figure 11, et
- la figure 14 représente une vue en perspective de la bague fixe 200.

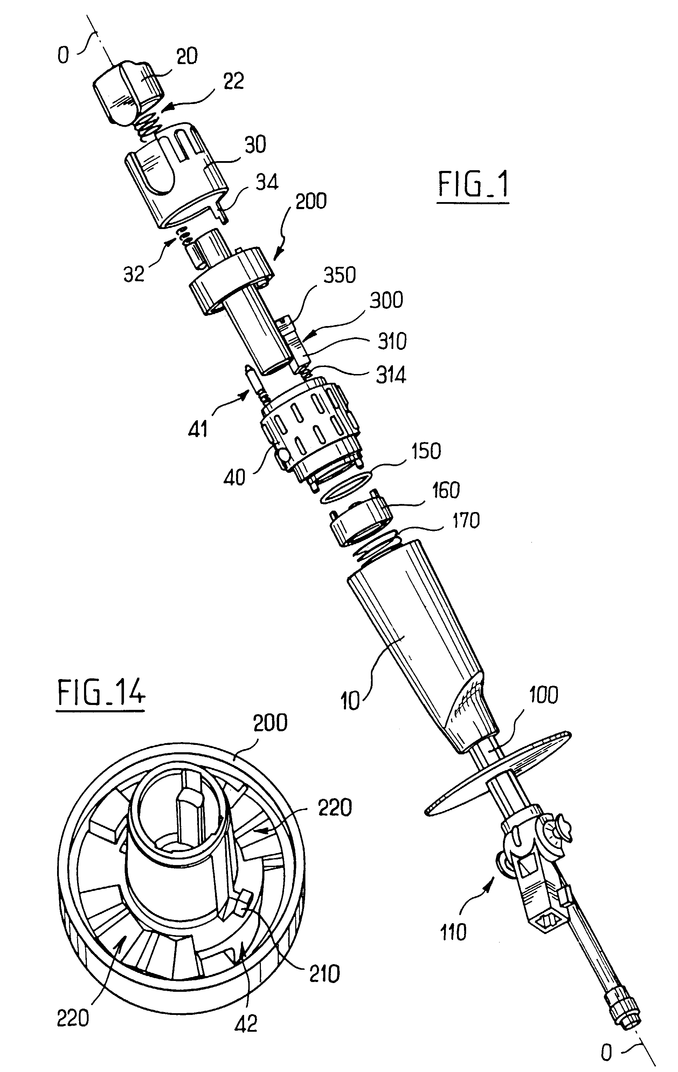

On a représenté sur la figure 1 annexée, la structure générale d'une manette de commutateur conforme à la présente invention

Bien entendu, l'exemple de réalisation illustré sur la figure 1 ne doit pas être considéré comme limitatif.

On aperçoit sur cette figure 1, un corps de manette 10 qui reçoit un arbre 100 équipé d'une bague fixe 200. En outre, la manette comprend un bouton d'extrémité 20 et deux bagues de commande rotatives 30, 40 sollicitées et indexées par des organes élastiques 22, 32 et 41. L'arbre support 100 est de préférence muni d'un support pivotant 110, pour permettre son guidage à pivotement sur un boîtier de commutateur électrique.

La structure d'un tel support pivotant 110 est classique en elle-même et ne sera donc pas décrite dans le détail par la suite.

En outre, dans le cadre de l'invention, il est prévu un doigt de réinitialisation 300. Ce doigt 300 est lié à rotation avec la bague 40, mais susceptible de translation axiale par rapport à celle-ci et à l'ensemble des composants de la manette, pour venir sélectivement en prise avec la première bague 30.

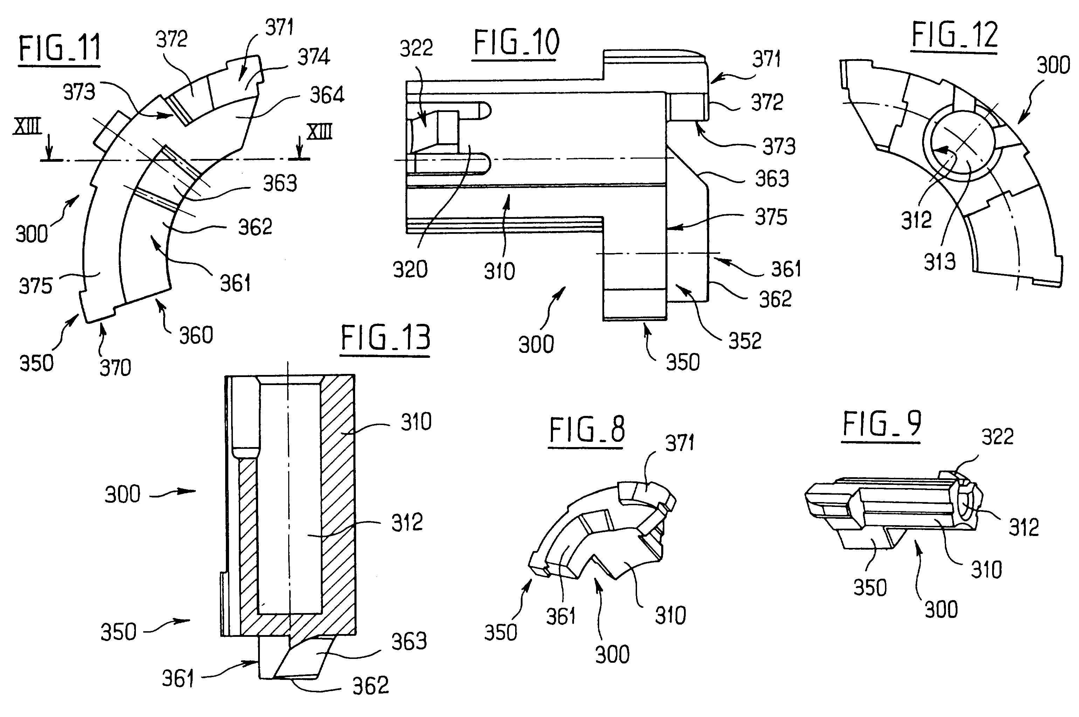

Comme on le voit sur les figures 8 et suivantes, selon l'invention, le doigt de réinitialisation 300 comprend un pied 310 et une tête 350.

Le pied 310 est formé d'un secteur de cylindre muni d'un alésage borgne axial 312 qui débouche axialement sur l'extrémité du pied 310 opposée à la tête 350.

Le pied 310 est adapté pour être placé dans un logement complémentaire 42 formé dans la bague 40. Le logement 42 possède des dimensions périphériques et radiales complémentaires de celles du pied 310 de sorte que le pied 310, et par le fait même le doigt 300, est lié à rotation avec la bague 40 mais susceptible de translation axiale selon l'axe O-O de la manette. Plus précisément, lorsque le pied 310 est placé dans le logement 42, la tête 350 est adjacente à la bague fixe 200.

L'alésage 312 est conçu pour recevoir un ressort 414. Celui-ci prend appui, d'une part contre le fond 313 de l'alésage 312, d'autre part sur une butée 44 prévue dans le fond du logement 42. Ainsi, le ressort 314 pousse la tête 350 du doigt 300 vers la bague fixe 200, et également vers la seconde bague 30.

De préférence, le doigt d'indexation 300 possède un moyen d'accrochage sur la bague 40.

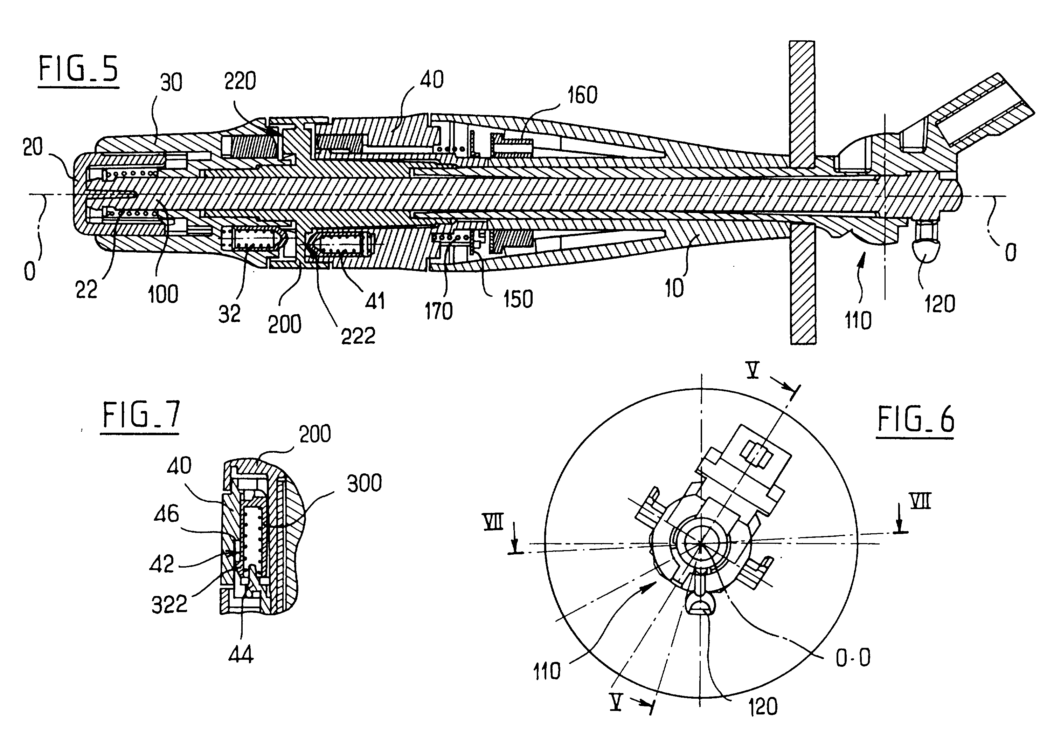

Selon le mode de réalisation particulier et non limitatif représenté sur les figures annexées, ce moyen d'accrochage est formé d'une languette 320 d'orientation axiale, prévue au voisinage de l'extrémité du pied 310 et muni d'une denture d'encliquetage 322 sur sa surface extérieure. Cette denture d'encliquetage 322 est adaptée pour venir en prise avec un décrochement 46 formé dans le logement 42, comme on le voit notamment sur la figure 7. L'homme de l'art comprendra aisément que la coopération ainsi définie entre la denture 322 et le décrochement 46 permet de définir un ensemble imperdable lorsque le doigt 300 est engagé dans le logement 42, par déformation élastique de la languette 320. En effet, une fois que la denture 322 a franchi le décrochement 46, le doigt d'indexage 300 ne peut plus être retiré de la bague 40 et ne peut par conséquent s'échapper sous l'effet de la sollicitation du ressort 314.

Comme on le voit sur les figures annexées, la tête 350 est également formée d'un secteur de cylindre. Cependant, l'ouverture angulaire de la tête 350 est supérieure à celle du pied 310. A titre d'exemple non limitatif, l'ouverture angulaire du pied 310 peut être de l'ordre de 60°, tandis que l'ouverture angulaire de la tête 350 est de préférence de l'ordre de 120°.

Sur sa surface axiale 352 opposée au pied 310, la tête 350 définit deux couronnes concentriques 360, 370.

La couronne 360 radialement interne est adaptée pour coopérer avec un doigt 210 fixe formé en saillie axialement sur la surface de la bague fixe 200 dirigée vers la bague 40 comme on le voit sur la figure 14.

Cette couronne 360 radialement interne porte une saillie 361 sur une première extrémité, de préférence l'extrémité périphérique gauche comme on le voit sur la figure 11. Cette saillie 361 possède un sommet 362 plan perpendiculaire à l'axe de rotation prolongé par un décrochement progressif 363, par exemple plan et incliné de l'ordre de 45° par rapport au sommet 362. Le décrochement 363 est lui-même suivi d'une base plane 364 perpendiculaire à l'axe de rotation et formant la base de la couronne radialement interne 360.

La couronne 370 radialement externe est adaptée pour coopérer

La couronne 370 radialement externe est adaptée pour coopérer avec une tige 34 liée à la bague 30. A cet effet, la couronne 370 radialement externe possède une saillie 371 sur son extrémité périphérique opposée à la saillie 361, soit de préférence sur l'extrémité périphérique droite selon la représentation donnée sur la figure 11.

La saillie 371 possède un sommet 372 plan perpendiculaire à l'axe de rotation délimité en direction de la saillie 360 par un décrochement 373 au moins sensiblement parallèle à l'axe de rotation O-O et de l'autre côté, soit le long d'un bord longitudinal de la tête 350 par une extrémité arrondie 374.

La tige 34 est de préférence venue de moulage sur la bague 30. Elle peut cependant être rapportée et fixée sur cette bague 30 par tout moyen approprié.

La longueur de la tige 34 est adaptée de sorte que cette tige 34 traverse la bague fixe 200 et vienne sélectivement en prise avec le doigt d'indexation 350, plus précisément la butée 371, selon la position axiale du doigt 300 imposée par la coopération définie entre la couronne radialement interne 360 et le doigt 210.

Le fonctionnement général de la manette illustrée sur les figures annexées est le suivant.

Lorsque la bague 40 adaptée par exemple pour commander les feux de brouillard d'un véhicule est en position de repos, la saillie 361 du pion de réinitialisation 300 repose sur le doigt 210 de la bague fixe 200. Le pion de réinitialisation 300 est ainsi maintenu en position éloignée de la bague 30 et de la tige 34 qui lui est liée. Dans ces conditions, la rotation de la bague 30 qui commande l'éclairage du véhicule entre les positions zéro, ville et route est sans effet sur la bague 40.

De même, lorsque la bague 30 est en position de repos, la rotation de la bague 40 est sans effet sur la bague 30.

Cependant, lorsque la bague 40 est déplacée en position de travail, le pion de réinitialisation 300 est également déplacé angulairement, de la même amplitude autour de l'axe O-O. La saillie 361 échappe alors au doigt 210. Le doigt 210 est placé en regard de la base 364 de sorte que le pion de réinitialisation 300 est susceptible d'avancer vers la bague 30 sous l'effet de la sollicitation du ressort 314. Un tel déplacement axial est néanmoins interdit si la bague 30 est en position de repos, le doigt 34 de la bague 30 reposant alors sur le sommet 372 de la saillie 371. Le déplacement axial du pion de réinitialisation 300 vers la bague 30 est en revanche autorisé si la bague 30 est en position ville ou route ou déplacée ultérieurement vers l'une de ces positions. Dans ce cas, en effet, le doigt 210 de la bague fixe 200 est placé contre la surface de base 364 de la couronne radialement interne 360 tandis que l'extrémité de la tige 34 est placée en regard de la surface de base 375 de la couronne 370 radialement externe. Dans cet état, un déplacement alternatif de la bague 30 entre les positions ville et route est sans effet sur le pion de réinitialisation 300 et la bague 40. Dans cette situation, en effet, la tige 34 se déplace simplement en regard de la surface de base 375 sans solliciter le décrochement 373 de la saillie 371.

Par contre, lorsque la bague 30 est déplacée en position de repos, la tige 34 vient solliciter le décrochement 373 précité et force ainsi un retour en position de repos du doigt de réinitialisation 300 et de la bague 40 qui lui est liée angulairement.

Ainsi, le retour en position de repos de la bague 30 commandant l'éclairage principal du véhicule force en position de repos la bague 40 qui commande les feux anti-brouillard du véhicule.

Comme on l'a indiqué précédemment, l'utilisation d'une tige 34 liée à la bague 30 traversant la bague fixe 200 permet d'utiliser un doigt de réinitialisation 300 de faible extension axiale et permet, par conséquent, de supprimer les jeux et l'effet de porte à faux inhérent à la structure décrite dans le document FR-A-2659488.

On notera que les doigts d'indexation associés aux organes élastiques 32 et 41, sont de préférence sollicités contre des rampes d'indexation 220, 222 prévues sur les faces respectivement en regard de la bague fixe 200.

Les moyens de commutation électrique commandés par les bagues 30, 40 et le bouton poussoir 20 sont classiques en eux-mêmes et ne seront donc pas décrits plus en détail par la suite.

On notera cependant que de préférence, le bouton poussoir 20 est adapté pour commander une première fonction électrique par translation axiale, selon l'axe O-O d'une tige 120 logée coaxialement dans l'arbre de support 100. Par ailleurs, la bague 30 est de préférence liée à rotation avec cet arbre 120 pour assurer une seconde fonction électrique, lors de sa rotation, par l'intermédiaire d'un doigt excentré 122 lié à l'extrémité axiale de l'arbre 120 opposé au bouton 20.

Enfin, de préférence, la bague 40 coopère avec une rondelle de contactage 150 associée à une platine 160 sollicitée par un ressort 170 pour assurer une troisième fonction électrique lors de sa rotation.

Bien entendu la présente invention n'est pas limitée au mode de réalisation particulier qui vient d'être décrit, mais s'étend à toute variante conforme à son esprit.

## Revendications

1. Commutateur électrique pour véhicules automobiles comprenant deux bagues (30, 40) montées à rotation autour d'un axe commun (O-O) et situées respectivement de part et d'autre d'une bague fixe (200), un doigt de réinitialisation (300) lié à rotation avec l'une des bagues (40) et des moyens (210) assurant un déplacement axial du doigt de réinitialisation (300) en fonction de sa rotation pour venir sélectivement en prise avec la seconde bague (30), caractérisé par le fait que la seconde bague (30) porte une tige (34) qui traverse la bague fixe (200) pour être sélectivement en prise avec le doigt de réinitialisation (300).

2. Commutateur selon la revendication 1, caractérisé par le fait que la tige (34) est liée de moulage avec la seconde bague (30).

3. Commutateur selon l'une des revendications 1 ou 2, caractérisé par le fait que le doigt de réinitialisation (300) comprend un pied (310) placé dans un logement (42) complémentaire de la première bague (40) et une tête évasée (350) adaptée pour coopérer avec les moyens (210) assurant un déplacement axial du doigt (300) et avec la tige (34).

4. Commutateur selon la revendication 3, caractérisé par le fait que le pied (310) du doigt de réinitialisation (300) possède un alésage borgne (312) adapté pour recevoir un ressort de sollicitation.

5. Commutateur selon la revendication 4, caractérisé par le fait que le ressort (314) sollicite le doigt de réinitialisation (300) vers la deuxième bague (30).

6. Commutateur selon l'une des revendications 1 à 5, caractérisé par le fait que le doigt de réinitialisation (300) possède des moyens (320, 322) d'automaintien par encliquetage sur la première bague (40).

7. Commutateur selon l'une des revendications 1 à 6 prise en combinaison avec la revendication 3, caractérisé par le fait que la tête (350) du doigt de réinitialisation (300) possède deux couronnes concentriques (360, 370) coopérant respectivement avec un doigt (210) solidaire de la bague fixe qui constitue les moyens assurant le déplacement axial du doigt de réinitialisation et avec la tige (34) solidaire de la seconde bague (30).

8. Commutateur selon la revendication 7, caractérisé par le fait que l'une des couronnes (360, 370) possède une sailllie (361) coopérant avec un doigt (210) en saillie sur la bague fixe (200).

9. Commutateur selon l'une des revendications 7 ou 8, caractérisé par le fait que l'une des couronnes (360, 370) possède une saillie (371) délimitée par un décrochement (373) sensiblement parallèle à l'axe de rotation apte à coopérer avec la tige (34) liée à la seconde bague (30) pour assurer un retour en position de repos de la première bague (40) lorsque la seconde bague (30) est elle-même entraînée en position de repos.
